# FASCICULE DE BREVET EUROPEEN

(11) **EP 1 202 621 B1**
(45) Date de publication et mention de la délivrance du brevet: **16.03.2005**
(21) Numéro de dépôt: 00943487.9
(22) Date de dépôt: 28.06.2000
(51) Int. Cl.: A01K 97/06, B65H 75/06, B65H 75/28

(54) **PLIOIR**
SCHNURHALTER
STORAGE REEL

(30) Priorité: 13.07.1999 BE 9900479; 08.11.1999 BE 9900727; 08.11.1999 BE 9900728; 04.02.2000 BE 20000091; 04.02.2000 BE 20000092; 04.02.2000 BE 20000093
(43) Date de publication de la demande: 08.05.2002
(73) Titulaire: LaHaye, Jean-Claude, 4100 Seraing (BE); Rosati, Antonio, 4420 Saint Nicolas (BE)
(72) Inventeur: LAHAYE, Jean-Claude, B-4100 Seraing (BE)
(86) Numéro de dépôt international: PCT/BE2000/000073
(87) Numéro de publication internationale: WO 2001/003502

(56) Documents cités:
- FR-A- 1 087 396
- US-A- 2 677 510
- US-A- 4 281 806
- US-A- 4 702 035

## Description

### DOMAINE TECHNIQUE.

La présente invention concerne la pêche à la ligne, et plus particulièrement un accessoire appelé plioir, utilisé pour enrouler et ranger les lignes de pêche.

### ETAT DE LA TECHNIQUE.

Dans la pratique de la pêche à la ligne, il est connu d'utiliser différents types de lignes en fonction des circonstances de la pêche.

Dans la présente demande, il est fait simplement référence à une ligne de pêche, pour des raisons de commodité ; il va de soi que ce terme englobe aussi bien les lignes à monofilament que les lignes à tresse.

Lorsqu'elles ne sont pas montées sur une canne à pêche, les lignes sont enroulées sur des supports spéciaux, appelés plioirs, en vue d'en faciliter la manipulation et le rangement.

De tels plioirs sont bien connus dans la technique.

Le brevet FR-A-626639 divulgue un plioir simple, essentiellement composé de deux plaquettes planes allongées, disposées parallèlement l'une à l'autre et assemblées par plusieurs entretoises réparties sur la longueur du plioir.

Par le brevet EP-AO-112 789, on connaît en outre un plioir dans lequel une entretoise divise l'espace intérieur entre les deux plaquettes en deux compartiments, dont l'un reçoit la ligne enroulée et l'autre reçoit le flotteur.

D'une manière générale, les plioirs connus et utilisés actuellement comportent plusieurs entretoises d'écartement des deux plaquettes latérales, qui sont réparties sur toute la longueur du plioir et qui assurent en outre sa rigidité.

Les plioirs actuellement connus présentent cependant deux inconvénients importants.

D'une part, ils provoquent une pliure de la ligne lors de son enroulement, ce qui conduit à une déformation permanente de la ligne, et éventuellement à la dégradation et parfois même la rupture de la ligne.

D'autre part, ils n'offrent pas une protection suffisante des flotteurs et des leurres, de sorte que ceux-ci se dégradent par suite du frottement contre les entretoises et les plaquettes latérales.

Enfin la taille de certains flotteurs est telle qu'ils ne peuvent pas toujours se loger dans l'espace intérieur du plioir, de sorte qu'ils peuvent aussi être endommagés par le contact avec des objets extérieurs.

Le document D1 (FR 1.087.396) décrit une boîte ronde constituée par un empilage d'éléments, chaque élément étant destiné à disposer simplement une mouche artificielle attachée à un hameçon et à un fil. Chaque élément se présente sous la forme d'un disque 1 portant une série de crochets s'ouvrant vers l'extérieur et disposés concentriquement à l'axe du disque, et une rangée de barrettes rectilignes très voisines disposées au centre du disque. Les extrémités du fil sont engagées entre des barrettes très voisines pour assurer leur fixation dans sur le disque. Le fil est sinon enroulé autour de l'ensemble des crochets.

Cette boîte n'est pas adaptée pour contenir un flotteur. Ceci ressort déjà du fait que la pêche à la mouche ne se pratique pas avec un flotteur, la mouche devant flotter d'elle-même à la surface de l'eau.

Le document D2 (US 4.702.035) décrit également une boîte pour le rangement d'un hameçon associé à un leurre mécanique (cuillère) et à un poids, ledit hameçon étant attaché à un fil. Cette boîte comporte un support circulaire portant des tiges et des guides avec bavette disposés le long du bord du support. L'hameçon est placé dans l'espace libre défini par les guides périphériques, tandis que le fil est enroulé autour des guides.

Cette boîte n'est pas adaptée pour contenir un flotteur. Ceci ressort du fait que la pêche à la cuillère ou leurre mécanique se fait sans flotteur.

La présente invention a pour objet de proposer un plioir, décliné en plusieurs variantes qui remédie aux inconvénients cités dans l'état technique en innovant d'autres qualités tout en garantissant une fabrication simple et aisée et par conséquent économique.

En particulier le plioir de l'invention doit permettre d'enrouler une ligne de pêche avec facilité, sans dommage, sans glissement ni pliure et offrant une protection complète.

L'invention a donc pour objet un Plioir pour une ligne de pêche avec un flotteur comportant une quille et une antenne, ce plioir comprenant :
- une plaquette plane ;
- des éléments en forme de cylindre ou en partie de cylindre ou cylindre de révolution disposés vers les extrémités de la plaquette, lesdits éléments présentant une zone de support de ligne dont le profil a une courbure suffisante pour enrouler la ligne de pêche sans pliure ni détérioration,
ce plioir étant caractérisé en ce que les éléments ont une longueur axiale par rapport à la plaquette de forme allongée ou carrée, de manière à définir par rapport à la plaquette un espace pour loger sans perte de place le flotteur, et en ce qu'un ou des éléments présentent une forme en arc ou une cannelure ou rainure de positionnement d'une extrémité de la quille ou de l'antenne du flotteur.

Le plioir, est par exemple composé d'une ou de deux plaquettes planes allongées, pleines ou ajourées sur lesquelles sont disposés différents éléments en saillie.

Deux éléments en forme de cylindre d'une longueur axiale propre, sont par exemple disposés par leur base respective, perpendiculairement ou légèrement inclinés par rapport à la plaquette plane.

Selon une forme de réalisation, la plaquette allongée (P) porte deux éléments (E) présentant une bavette (BV) à leur extrémité éloignée de la plaquette (P), et en ce que les deux éléments (E) présentent chacun une rainure (R1,R2) parallèle à la plaquette (P) et alignée sur un même axe pour le positionnement d'une extrémité de l'antenne (13) ou de la quille (11), tandis que selon une autre forme de réalisation, la plaquette allongée (P) porte deux éléments (E) présentant chacun une rainure (R1,R2) parallèle à la plaquette (P) et alignée sur un même axe pour le positionnement d'une extrémité de l'antenne (13) ou de la quille (11), ainsi que deux ergots (ER) pour accrocher la ligne de pêche.

Deux bavettes sont avantageusement et respectivement disposées en excroissance de part et d'autre des deux rainures. Les deux éléments en forme de cylindre sont pourvus d'une bavette située sur le bord extérieur respectif, ainsi que vers les extrémités de la plaquette plane. Ces bavettes empêchent tout glissement des lignes de pêche, enroulées.

Des ergots peuvent être situés en des points définis du plioir pour accrocher la ligne.

Une deuxième plaquette plane composée d'éléments en saillie peut s'accoupler dans le même plan que le plioir.

Le positionnement, soit de l'antenne, de la quille, du flotteur du bouchon, se fait par l'utilisateur dans les deux rainures ou du coté de ces deux rainures, par le champ en face des rainures et parallèle aux plaquettes planes.

Selon une autre forme de réalisation dans laquelle le plioir comporte deux éléments portés par une plaquette allongée, ledit plioir est caractérisé en ce que la plaquette plane (P) porte des renforts de rigidité (RG) disposés en saillie longitudinale, un ergot (ER) pour accrocher la ligne de pêche, des lignes guides (GD) disposées entre les faces en vis à vis des éléments (E),
en ce que lesdits deux éléments (E) présentent une bavette (BV) à leur extrémité éloignée de la plaquette (P), et
en ce que lesdits deux éléments (E) présentent chacun une forme en arc cylindrique (ARC) ou une cannelure (CA) pour le positionnement de l'extrémité de l'antenne ou de la quille dans lesdits éléments (E), lesdites cannelures (CA) étant pratiquées sur les deux faces en vis à vis des éléments.

Dans cette forme de réalisation, le positionnement, soit de l'antenne, de la quille, du bouchon, se fait par l'utilisateur dans le plan vertical à la plaquette plane, c'est à dire, face à la plaquette plane.

Selon encore une autre réalisation dans laquelle le plioir comportant trois éléments (E,E') portés par une plaquette allongée (P), ledit plioir est caractérisé en ce qu'un (E') desdits éléments présente une cannelure (CA) pour le positionnement d'une extrémité de la quille (11) ou de l'antenne (13) dans ledit élément (E').

Les trois éléments en formes de cylindre sont par exemple pourvus d'une bavette en excroissance située sur le bord extérieur respectif ainsi que vers les extrémités de la plaquette plane. Des ergots sont par exemple disposés en différents points sur la plaquette plane, pour accrocher la ligne par une boucle ou un hameçon (crochet). Des renforts de rigidité sont par exemple disposés en saillie longitudinalement sur la plaquette plane.

Dans cette forme de réalisation le positionnement, soit de l'antenne, de la quille, du flotteur, du bouchon, se fait par l'utilisateur dans le plan vertical à la plaquette plane, c'est à dire, face à la plaquette plane.

Selon une forme de réalisation dans laquelle ledit plioir comportant quatre éléments (E) portés par une plaquette carrée (P),
caractérisé en ce que lesdits éléments (E) sont disposés aux coins de la plaquette (P), en ce que les éléments (E) présentent une bavette (BV) à leur extrémité éloignée de la plaquette (P), et
en ce que les éléments (E) présentent chacun une forme d'arc cylindrique.

Quatre guides lignes peuvent être disposés deux par deux de part et d'autres d'un axe défini pour enrouler le fil aisément.

Les quatre éléments en forme de cylindre sont par exemple pourvus d'une bavette en excroissance située sur le bord extérieur respectif ainsi que vers les extrémités de la plaquette plane. Des ergots sont par exemple disposés en différents points sur la plaquette plane, pour accrocher la ligne par une boucle ou un hameçon (crochet). Des renforts de rigidité sont par exemple disposés en saillie longitudinalement sur la plaquette plane. Cette forme de réalisation, possédant des espaces plus importants est utilisée pour les plus grands flotteurs ou quilles qui demandent des volumes d'espace en fonction de leur taille respective.

Des détails et caractéristiques de ces formes de réalisation sont donnés dans les revendications

Selon une variante, le plioir suivant l'invention est un Plioir pour une ligne de pêche avec un flotteur comprenant une quille (11) et une antenne (13), ce plioir comprenant:
- une plaquette plane (P);
- quatre éléments (E) en forme de cylindre disposés vers les extrémités de la plaquette (P), lesdits éléments (E) présentant une zone de support (Z) de ligne dont le profil a une courbure suffisante pour enrouler la ligne de pêche (CH) sans pliure ni détérioration,
pour lequel un axe médian longitudinal (ML) est défini entre les éléments et pour lequel quatre guides ligne (GD) sont disposés deux par deux de part et d'autre de l'axe médian longitudinal (ML) pour positionner la quille (11) et l'antenne (13) du flotteur.

### Descriptif des dessins

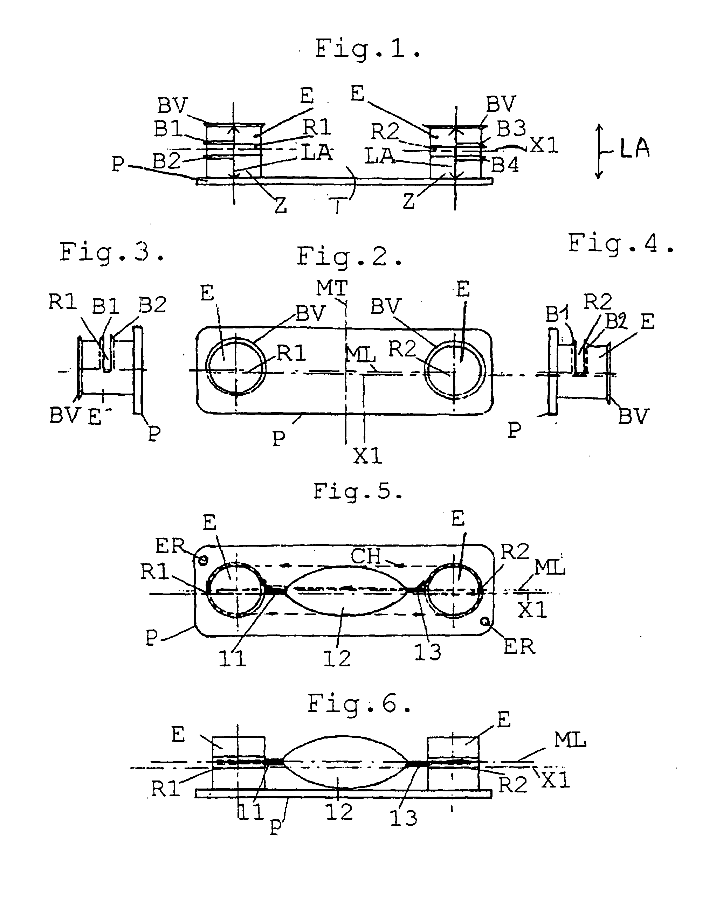

Fig.1. La figure 1 est représentée par une vue en élévation du plioir dans un plan horizontal.
   La vue montre :
   Les deux éléments en forme de cylindre E d'une longueur axiale propre LA sont disposés par leurs bases respectives perpendiculairement par rapport à la plaquette plane P.
   Une rainure R1 et une rainure R2 respectivement pratiquées dans chacune des deux faces courbes des corps des deux éléments E.
   Les rainures R1 et R2 sont alignées dans la même direction et sur le même axe défini X1, cet axe X1 est longitudinal et parallèle à la plaquette plane.
   Deux bavettes B1 et B2 situées en excroissance de part et d'autre de la rainure R1 de l'élément E1.
   Deux bavettes B1 et B2 situées en excroissance de part et d'autre de la rainure R2 de l'élément E2.
   Une bavette BV située sur le bord extérieur respectif des deux éléments E.
   La zone de support Z de la ligne de part et d'autre des rainures R1 et R2.
Fig.2. La figure 2 est représentée par une vue en plan du plioir dans un plan horizontal.
   La vue montre:
   Les deux éléments en forme de cylindre E sont disposés vers les extrémités de la plaquette plane.
   La bavette BV située en excroissance sur le bord extérieur respectif des deux éléments E.
   Un axe médian transversal MT.
   Un axe médian longitudinal ML.
   La plaquette plane P.
   L'axe défini X1 sur lequel sont alignées les deux rainures R1 et R2
Fig.3. La figure 3 est représentée par une vue de profil gauche de la figure 2 du plioir.
   Le profil gauche montre:
   La plaquette plane P.
   L'élément E.
   La rainure R1.
   Les bavettes B1, B2 et BV.
Fig.4. La figure 4 est représentée par une vue de profil droit de la figure 2 du plioir.
   Le profil droit montre :
   La plaquette plane P.
   L'élément E.
   La rainure R2.
   Les bavettes B1, B2 et BV
Fig.5. La figure 5 est représentée par une autre vue en plan du plioir dans un plan horizontal.
   La vue montre :
   La plaquette P.
   Les deux éléments E.
   L'axe ML.
   L'axe X1.
   Les deux rainures R1 et R2.
   Le cheminement CH de la ligne de pêche.
   La position centrale du corps central de la ligne de pêche, composé du flotteur, de la quille 11, du corps principal 12, de l'antenne 13.
   Deux ergots ER.
Fig.6. La figure 6 est représentée par une autre vue en élévation du plioir dans un plan horizontal.
   La vue en élévation montre :
   La plaquette plane P.
   Les deux éléments E
   Les rainures R1 et R2
   L'axe X1
   L'axe ML.
   La position centrale du corps principal de la ligne de pêche, composée du flotteur, de la quille 11, du corps central 12, de l'antenne 13.

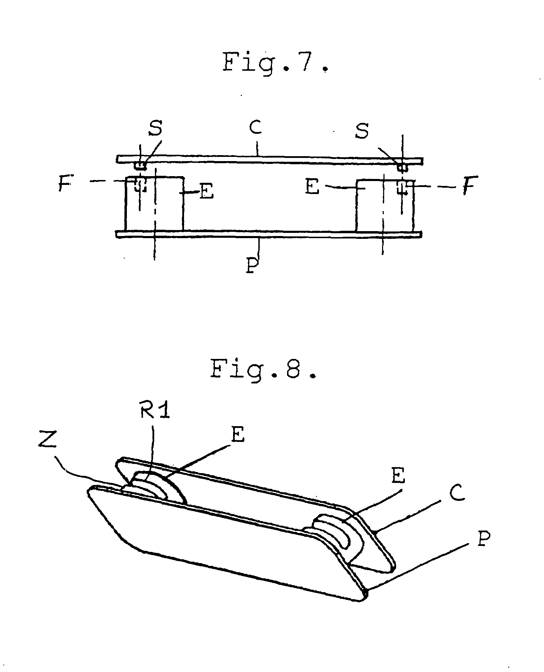

Fig.7. La figure 7 est représentée par une autre vue en élévation du plioir dans un plan horizontal.
   La vue en élévation montre :
   La plaquette P.
   Un couvercle composé d'une plaquette plane C munie de deux éléments mâle en saillie S, prête à s'accoupler avec deux éléments femelle F situés dans les éléments E. La plaquette plane P accouplée à la plaquette C forme un plioir composé de deux plaquettes planes.
Fig.8. La figure 8 est une vue en perspective du plioir,
   Cette vue montre en particulier :
   Les deux zones de support Z de ligne des éléments E.
   Les plaquettes P et C.
   Les rainures R1 et R2.

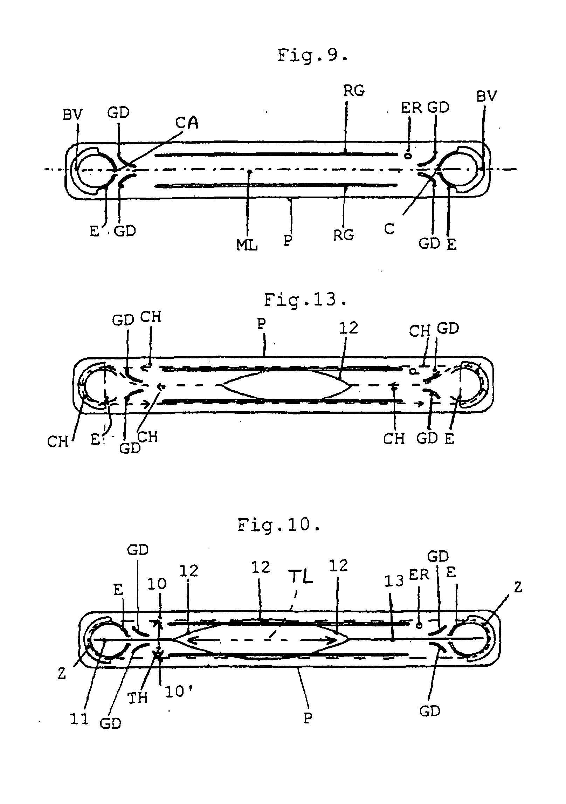

Fig.9. La figure 9 est une vue en plan d'un plioir dont la plaquette plane allongée est posée à plat sur un plan horizontal montrant :
   Le contour 1 extérieur de la plaquette P.
   La position et la forme des deux éléments en forme de cylindre E par rapport à un axe médian longitudinal ML de la plaquette.
   Un trait mixte ML médian et longitudinal de la plaquette.
   Les deux éléments E sont disposés aux deux extrémités de la plaquette plane P.
   La position des bavettes BV respectivement sur les éléments E.
   Des renforts de rigidités RG sont disposés en saillie longitudinalement sur la plaquette plane P.
   Les guides ligne GD respectivement disposés sous les deux faces en vis à vis des éléments E.
   Un ergot ER pour accrocher la ligne de pêche par une boucle.
   Une cannelure CA est pratiquée sur chacune des deux faces en vis à vis des éléments E.
Fig.10. La figure 10 est une vue en plan d'un plioir dont la plaquette plane est posée à plat sur un plan horizontal montrant :
   La tangente 10 joignant les deux points de fin de courbure extérieur de la zone Z de support de ligne des éléments cylindriques E.
   La tangente 10' joignant les deux points de fin de courbure extérieur de la zone Z de support de ligne des deux éléments cylindriques E.
   L'espace transversal horizontal TH est créé entre les tangentes 10 et 10; un flotteur avec quille 11, corps du flotteur 12, et antenne 13, étant positionné dans l'espace horizontal TH et longitudinal TL
   Les deux zones Z de support de ligne des éléments E.

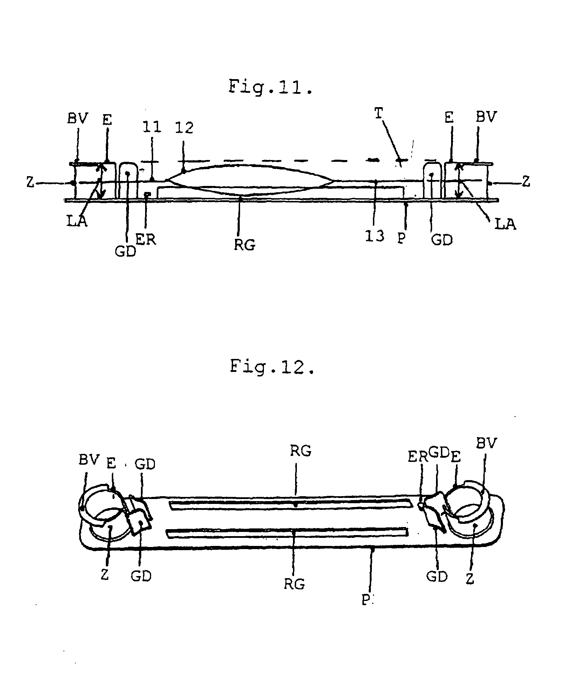

Fig.11. La figure 11 est une vue en élévation d'un plioir dont la plaquette plane P allongée et posée à plat sur un plan horizontal montrant :
   Le contour 1 extérieur de la plaquette plane
   La position perpendiculaire à la plaquette plane P des deux éléments E.
   Les longueurs axiales propres LA des éléments E.
   Les deux zones Z de support de ligne des éléments E.
   La position et la forme des deux bavettes BV d'arrêt de ligne en excroissance sur les éléments E.
   Un flotteur ; la quille11, le corps de flotteur 12, l'antenne 13, positionné dans l'espace transversal perpendiculaire T à la plaquette plane P en fonction de la longueur axiale LA des éléments E.
Fig.12. La figure 12 est une vue en perspective du plioir montrant de façon suggestive les paramètres des points des figures 9,10 et 11.

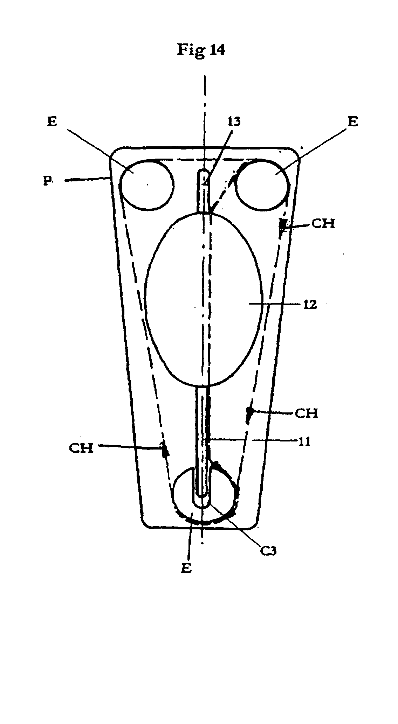

Fig.13. La figure 13 est une vue en plan d'un plioir dont la plaquette allongée P est posée à plat sur un plan horizontal.
   Tout les points des figures 9 et 10 sont égaux aux paramètres de la figure 13.
   La raison, des éléments E qui sont ici en forme de cylindre dont la zone de support de ligne forme un arc, est que dans le cas de la figure 13, la distance longitudinale entre les deux faces vis à vis des deux éléments E est augmentée, cela pour éviter une perte de place longitudinalement.
   Elle montre également le cheminement de la ligne CH.
Fig.14. La figure 14 est une vue en plan de la plaquette plane P posée à plat sur un plan horizontal.
   La vue montre :
   Trois éléments E disposés perpendiculairement à la plaquette P et vers les trois extrémités.
   Le cheminement de ligne CH
   La quille 11, le corps 12, et l'antenne 13 du flotteur
   Deux guides ligne GD sous la cannelure CA d'un élément E'.
   Deux renforts de rigidité sous la cannelure CA de l'élément E'.
   Un ergot ER.

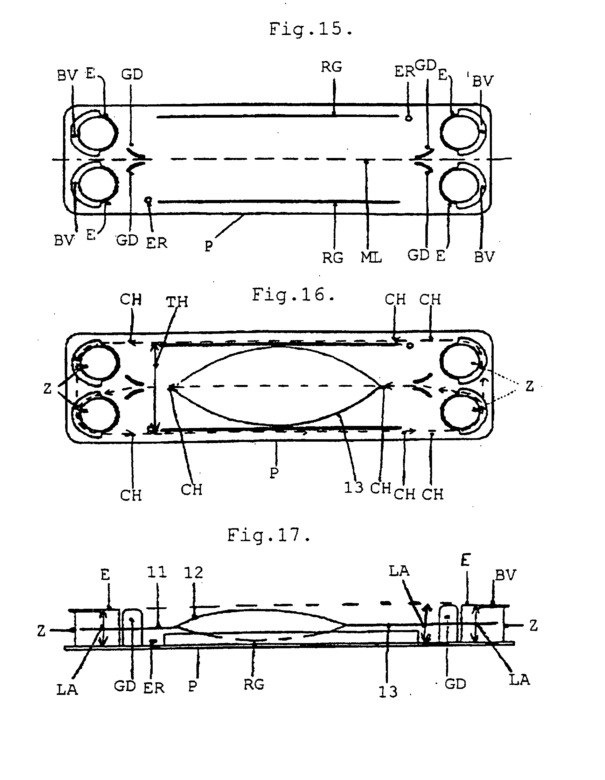

Fig.15. La figure 15 est une vue en plan d'un plioir dont la plaquette plane allongée P5 est posée à plat sur un plan horizontal montrant :
   Le contour 1 extérieur de plaquette plane P.
   La position des éléments E de part et d'autre de l'axe médian longitudinal ML de la plaquette plane.
   La position et la forme des 4 bavettes BV d'arrêt de ligne en excroissance et vers l'extérieur des éléments E.
   Un trait mixte ML trace d'un plan médian de la plaquette plane.
   Quatre guides ligne GD disposés deux par deux de part et d'autre de l'axe ML et sous les faces en vis à vis.
   Des renforts de rigidité sont disposés en saillies longitudinales à plaquette plane.
   Un ergot en picot pour accrocher la ligne par une boucle ou un hameçon.
Fig.16. La figure 16 est une vue en plan d'un plioir dont la plaquette plane P est posée à plat sur un plan horizontalement montrant :
   L'espace transversal horizontal TH.
   Les zones Z de support de ligne de pêche.
   Le cheminement CH de la ligne.
Fig.17. La figure 17 est une vue en plan d'un plioir dont la plaquette plane Allongée P est posée à plat sur un plan horizontal montrant :
   La longueur axiale LA propre des quatre éléments cylindriques E.
   Une partie du contour de la plaquette 1.
   La position perpendiculaire à la plaquette plane des quatre éléments E.
   Un renfort de rigidité RG en saillie sur la plaquette P.
   La zone de support Z de ligne des éléments E.
   La position des bavettes d'arrêt de ligne BV.
   La position du flotteur, quille, corps et antenne, dans l'espace transversal perpendiculaire à la plaquette plane P, l'espace transversal en rapport avec la longueur axiale LA des éléments E.

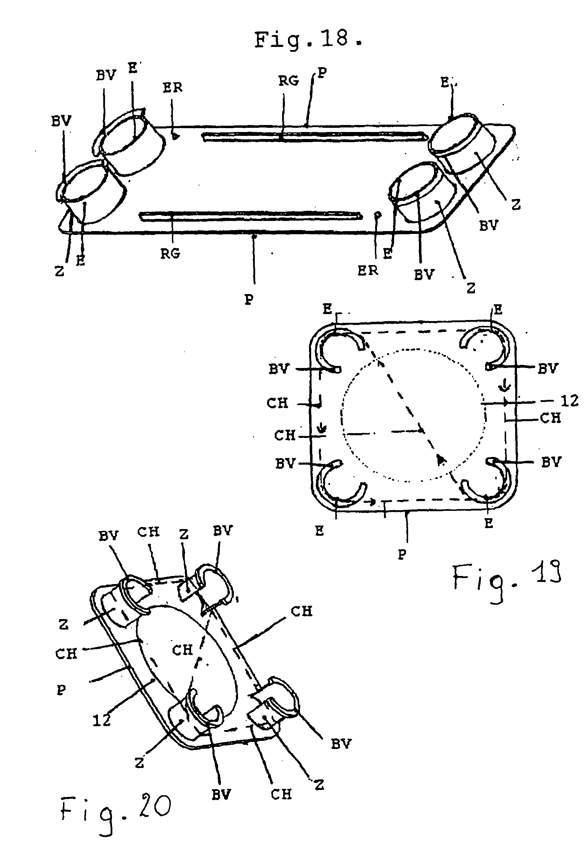

Fig.18. La figure 18 est une vue en perspective du plioir montrant de façon Suggestive les éléments des figures 15, 16 et 17.
Fig.19. La figure 19 est une en plan d'un plioir dont la plaquette plane carrée P est posée sur un plan horizontal montrant :
   Les éléments en forme de cylindre E ont une zone Z de support de ligne dont la surface en forme d'arc et disposés aux quatre extrémités de la plaquette.
   Un corps flotteur de forme ronde et le cheminement de la ligne CH.
   Sur cette figure, les éléments E sont distants d'une diagonale relative au diamètre du flotteur.
Fig.20. La figure 20 est une vue en perspective montrant de façon suggestive les éléments de la figure 19.

## Revendications

1. Plioir pour une ligne de pêche avec un flotteur comportant une quille (11) et une antenne ( 13), ce plioir comprenant :
- une plaquette plane (P);
- des éléments (E) en forme de cylindre ou en partie de cylindre ou cylindre de révolution disposés vers les extrémités de la plaquette (P), lesdits éléments (E) présentant une zone de support (Z) de ligne dont le profil a une courbure suffisante pour enrouler la ligne de pêche (CH) sans pliure ni détérioration,
**caractérisé en ce que** les éléments (E) ont une longueur axiale (LA) par rapport à la plaquette (P) de forme allongée ou carrée, de manière à définir par rapport à la plaquette un espace (T) pour loger sans perte de place le flotteur, et **en ce qu'**un ou des éléments (E) présentent une forme en arc ou une cannelure (CA) ou rainure (R1,R2) de positionnement d'une extrémité de la quille (11) ou de l'antenne (13) du flotteur.

2. Plioir suivant la revendication 1, **caractérisé en ce que** la plaquette allongée (P) porte deux éléments (E) présentant une bavette (BV) à leur extrémité éloignée de la plaquette (P), et **en ce que** les deux éléments (E) présentent chacun une rainure (R1,R2) parallèle à la plaquette (P) et alignée sur un même axe pour le positionnement d'une extrémité de l'antenne (13) ou de la quille (11).

3. Plioir suivant la revendication 1, **caractérisé en ce que** la plaquette allongée (P) porte deux éléments (E) présentant chacun une rainure (R1,R2) parallèle à la plaquette (P) et alignée sur un même axe pour le positionnement d'une extrémité de l'antenne (13) ou de la quille (11), ainsi que deux ergots (ER) pour accrocher la ligne de pêche.

4. Plioir suivant la revendication 1, ledit plioir comportant deux éléments (E) portés par une plaquette allongée (P), lesdits éléments (E) présentant chacun une rainure (R1,R2) parallèle à la plaquette (P) pour le positionnement de l'extrémité de l'antenne (13) ou de la quille (11), **caractérisé en ce que** les éléments (E) présentent chacun un élément femelle (F), et **en ce qu'**il comprend un couvercle composé d'une plaquette plane (C) munie de deux éléments mâles en saillie (S) prêts à s'accoupler avec les éléments femelles (F) des éléments (E) en forme de cylindre.

5. Plioir suivant la revendication 1, ledit plioir comportant deux éléments (E) portés par une plaquette allongée (P),
**caractérisé en ce que** la plaquette plane (P) porte des renforts de rigidité (RG) disposés en saillie longitudinale, un ergot (ER) pour accrocher la ligne de pêche, des lignes guides (GD) disposées entre les faces en vis à vis des éléments (E),
**en ce que** lesdits deux éléments (E) présentent une bavette (BV) à leur extrémité éloignée de la plaquette (P), et
**en ce que** lesdits deux éléments (E) présentent chacun une forme en arc cylindrique (ARC) ou une cannelure (CA) pour le positionnement de l'extrémité de l'antenne ou de la quille dans lesdits éléments (E), lesdites cannelures (CA) étant pratiquées sur les deux faces en vis à vis des éléments.

6. Plioir suivant la revendication 1, ledit plioir comportant trois éléments (E,E') portés par une plaquette allongée (P),
**caractérisé en ce qu'**un (E') desdits éléments présente une cannelure (CA) pour le positionnement d'une extrémité de la quille (11) ou de l'antenne (13) dans ledit élément (E').

7. Plioir suivant la revendication 1, ledit plioir comportant quatre éléments (E) portés par une plaquette carrée (P),
**caractérisé en ce que** lesdits éléments (E) sont disposés aux coins de la plaquette (P),
**en ce que** les éléments (E) présentent une bavette (BV) à leur extrémité éloignée de la plaquette (P), et
**en ce que** les éléments (E) présentent chacun une forme d'arc cylindrique.

8. Plioir suivant la revendication 2, **caractérisé en ce que** deux bavettes (B1,B2) sont situées en excroissance de part et d'autre de chaque rainure (R1,R2) empêchant le glissement de la ligne dans la rainure.

9. Plioir suivant l'une quelconque des revendications précédentes, **caractérisé en ce que** les éléments peuvent permutés.

10. Plioir suivant la revendication 1, **caractérisé en ce qu'**il comporte deux ou trois ou quatre éléments (E,E').

11. Plioir suivant la revendication 1, **caractérisé en ce que** les éléments (E,E') présentent une bavette (BV).

12. Plioir suivant la revendication 1, **caractérisé en ce que** des guides ligne (GD) ayant un profil de courbure suffisante pour assurer l'enroulement de la ligne de pêche sans pliure sont disposés deux par deux de part et d'autre d'un axe de la plaquette.

13. Plioir suivant la revendication 1, **caractérisé en ce que** des ergots (ER) sont disposés sur la plaquette.

14. Plioir suivant la revendication 1, **caractérisé en ce que** des renforts (RG) de rigidité sont disposés en saillie longitudinalement sur la plaquette (P).

15. Plioir pour une ligne de pêche avec un flotteur comprenant une quille (11) et une antenne (13), ce plioir comprenant:
- une plaquette plane (P);
- quatre éléments (E) en forme de cylindre disposés vers les extrémités de la plaquette (P), lesdits éléments (E) présentant une zone de support (Z) de ligne dont le profil a une courbure suffisante pour enrouler la ligne de pêche (CH) sans pliure ni détérioration,
pour lequel un axe médian longitudinal (ML) est défini entre les éléments et pour lequel quatre guides ligne (GD) sont disposés deux par deux de part et d'autre de l'axe médian longitudinal (ML) pour positionner la quille (11) et l'antenne (13) du flotteur.

## Claims

1. Storage Reel for a line of peach(fishing) with a float containing a_skittle_(11) and an antenna (13), this understanding(including) Storage Reel :
- a flat plaque (P);
- elements (E) in shape of cylinder, partially there of shape of cylinder, cylinder of revolution arranged towards the extremities of the plaque (P), elements (E) presenting a zone of support of line (Z) profile of which has a sufficient curve to roll up the line of peach(fishing) (CH) without fold and deterioration,
**characterized in** what elements (E) have an axial length with regard to the plaque (P) lengthened(stretched out) shape or squared, so as to define with regard to the plaque (P) a space (T) to accommodate without lossof place the float and it who one or elements (E) presenting a shape in bow or groove (CA) or grooves (R1, R2) for the location of an extremity of the skittle (11) or of the antenna (13) of the float.

2. Storage Reel according to the demand 1, **characterized in** what the lengthened (stretched out) plaque ( P ) carries(wears) two elements (E), elements ( E ) presenting a bib (BV) to their extremity remote from the plaque (P) and it who two elements ( E ) presenting each a groove (R1, R2) in parallel to the plaque ( P ) and aligned on the same axis for the location of an extremity of the antenna ( 13 ) or of the skittle (11).

3. Storage Reel according to the demand 1, **characterized in** what the lengthened(stretched out) plaque carries(wears) two elements (E) presenting each a groove (R1, R2) parallel to the plaque (P) and aligned on the same axis for the location of an extremity of the antenna (13) or of the skittle (11), as well as two spurs (ER) to hang on(collide) the line of peach(fishing)

4. Storage Reel according to the demand 1, the aforementioned plioir containing two elements (E) carried(wom) with a lengthened(stretched out) plaque (P), the aforementioned elements (E) presenting each a groove (R1, R2) parallel to the plaque (P) for the location of the extremity of the antenna or of the skittle (11), **characterized in** what elements
(E) present each an element female (F), and it who it contains a lid consisted of a flat plaque (C) presenting two male elements in projection(s) ready of coupling with elements females (F) elements (E) in shape of cylinder

5. Storage Reel according to the demand 1, the aforementioned plioir containing two elements (E) carried(worn) with a lengthened(stretched out) plaque (P) **characterized in** what the plaque smooths carry(wear) reinforcements of rigidity (RG) arranged in projection Longitudinal, a spur (ER) to hang on(collide) lea line of peach(fishing), guides line arranged (GD) between faces in face to face elements (E), it whom the aforementioned two elements (E) present a bib (BV) to their extremity remote from the plaque (P) ,and It who the aforementioned two elements (E) present each a shape in cylindrical bow (BOW) or a groove (CA) for the positionnelent of the extremity of the antenna where of the skittle int the aforementioned elements (E), the aforementioned grooves (CA) being practised on two faces in face to face elements.

6. Storage Reel according to the demand 1, the aforementioned plioir containing three elements (E, E') carried(worn) with a lengthened(stretched out) plaque (P), **characterized in** what one (E') the aforementioned elements presents a groove (CA) for the location of the skittle (11) or of the antenna (13) in the aforementioned element (E')

7. Storage Reel according to the demand 1, the aforementioned plioir containing four elements carried(worn) with a square plaque (P), **characterized in** what the aforementioned elements (E) are arranged In corners(places) of the plaque (P), it who elements (P) present a bib (BV) in their extremity remote from the plaque (P), and it who elements present each a shape of cylindrical bow.

8. Storage Reel according to the demand 2, **characterized in** what two bib (B1 B2) is situated in exgrowth on both sides with every groove (R1 R2) preventing the gliding of the line (HP) in the groove.

9. Storage Reel according to some of the demand previous ones, **characterized in** what Elements can switched around.

10. Storage Reel according to the demand 1, **characterized in** what it(he) contains two or three elements orfour elements (E E').

11. Storage Reel according to the demand 1, **characterized in** what elements (E E') present a bib (BV).

12. Storage Reel according to the demand 1, **characterized in** what guides line ( GD) having a profile of sufficient curvature to assure(insure) the rolling-up of the line of peach(fishing) without fold are arranged two by two on both sides an axis of the plaque (P).

13. Storage Reel following demand 1, **characterized in** what spur (ER) is arranged on the plaque (P).

14. Storage Reel according to the demand 1, **characterized in** what reinforcements (R G) of rigidity are arranged in projection longitudinalement on the plaque (P)

15. Storage Reel for a line of peach(fishing) with a float understanding(including) a skittle (11) and one antenna (13), this understanding(including) :(Storage Reel)
- a plaque glides (P);
- four elements (E) in shape of cylinder arranged towards the extremities of the plaque (P), the aforementioned elements (E) presenting a zone of support (Z) of line profile of which has a curvature sufficient to roll up the line of peach(fishing) (CH)
without fold or deterioration, for which(whom) a longitudinal median axis (ML) is defined between elements and for which(whom) four guides line (GD) is arranged two by two of the part of of other one of the longitudinal median axis ( ML) for positioned the skittle (11) and the antenna (13) of the float.

## Patentansprüche

1. Schnurhalter für eine fischfang-Linie mit einem schwimmer (12), eine kegel (11) und eine fuhler (13) beinhaltend, dieser beinhaltende Schnurhalter ;
eine ebene plakette (P)
von den elementen in form eines zylinders (E) wo teilweise von zylinder wo zylinder von revolution gegen die extremitäten der plakette (P), die elemente (E) eine stütze-Zone (Z) präsentierend, linie, deren profil eine biegung hat, genügt, um die fischfang-Linie (CH) ohne falzung noch erschlechterung einzurollen, in dem charakterisiert, was die elemente (E) eine axiale länge (LA) im vergleich zur plakette (P) haben, von verlängerter form wo quadratisch, weise hat einen raum (T) im vergleich zur plakette zu definieren um den schwimmer ohne verlust von vlatz zu beherbergen, und elemente (E) präsentiert eine form in bogen wo eine furche (ÇA), wo nute (R1 R2), von positionierung von einer extremität vom Kegel (11) wo vom fuhler (13) des Schwimmers (12).

2. Schnurhalter nach der forderung 1, charakterisiert in dem der die verlängerte plakette (P) tür zwei elemente (E), ein lätzchen (BV) an ihrer entfernten extremität der plakette (P) in dem präsentierend, was die zwei elemente jedem eine nute (R1 R2) an der plakette (P) parallel präsentieren, und aufgereiht auf einer gleichartigen achse für die positionierung von einer extremität der fühler (13) wo vom Kegel (11).

3. Schnurhalter nach der forderung 1, charakterisiert in dem der die verlängerte plakette (P) tür zwei elemente (E), jedem eine nute (R1 R2) an der plakette (P) parallel präsentierend, und aufgereiht auf einer gleichartigen achse für die positionierung von einer extremität der fuhler (13) wo vom Kegel, (11), so der zwei domen (ER), um die fischfang-Linie zu hängen.

4. Schnurhalter nach der forderung 1, besagt Schnurhalter zwei elemente (E) durch eine verlängerte plakette (P), - die Elemente (E) jedem eine Nute (R1 R2) an der Plakette (P) parallel präsentierend, getragen beinhaltend, für die positionierung von der extremität der fuhler (13) wo vom Kegel (11), charakterisiert in dem der sie elemente (E) präsentieren jedem ein weibliches element (F), und in dem, was er einen von der plakette zusammengesetzten deckel (C) fertig ausgestattet von zwei männlichen elementen in orsprüngen (S) versteht, hat, sich mit den weiblichen elementen (F) von den elementen (E) in form eines zylinders zu paaren.

5. Schnurhalter nach der forderung 1, besagt plioir, zwei elemente (E) getragen beinhaltend, durch eine verlängerte plakette (P),
in dem charakterisiert, der die ebene plakette (P) tür von den verstärkungen von steifheiten (RG) disponiert in der länge nach vorsprung, ein dom (ER), um die fischfang-Linie zu hängen, führer linieren,( GD), zwischen den Gesichtern in gegenüber den Elementen (E) disponiert, in dem die zwei elemente (E) präsentieren ein lätzchen (BV) an ihrer entfernten extremität von die plakette (P),und
in dem die zwei elemente (E) präsentieren jedem eine form in zylinderförmigem bogen (ARC) wo eine furche (ÇA) auf den zwei gesichtern in gegenüber den elementen ausgeführt werdend.

6. Schnurhalter nach der forderung 1, besagt plioir, drei elemente (E) getragen beinhaltend, durch eine verlängerte plakette (P),
in dem charakterisiert, der ein (E') elemente präsentiert eine furche (ÇA) für die positionierung von einer extremität des kegels (11) wo von der fuhler (13) ins sagt Element (E').

7. Schnurhalter nach der forderung 1, besagt Schnurhalter vier elemente (E) durch eine getragen beinhaltend,
quadratische Plakette (P),
in dem charakterisiert, was die elemente (E) an den ecken der plakette (P) disponiert sind, in dem, was die elemente (E) jedem eine Form von zylinderförmigem bogen präsentieren.

8. Schnurhalter nach der Forderung 2, die in dem charakterisiert wird, was zwei lätzchen (B1 B2) sind, gegenseitig in auswuchs von jeder nute (R1 R2), den rutsch der linie (CH) in der nute verhindernd, festgelegt.

9. Schnurhalter nach dem eine beliebige der vorhergehenden forderung folgend, charakterisiert in dem der die Elemente können ausgetauscht.

10. Schnurhalter nach der forderung 1, charakterisiert in dem, was er zwei beinhält, wo drei elemente wo vier elemente (E E').

11. Schnurhalter nach der forderung 1, die in dem charakterisiert wird, was die elemente (E E') präsentieren, ein lätzchen (BV).

12. Schnurhalter nach der forderung werden 1, charakterisiert in dem, was, (GD), ein frofil von ausreichender biegung habend, um das zusammenrollen von der fischfang-Linie ohne falzung zu versichern, von den führem liniert, gegenseitig zwei von zwei über eine achse der plakette verfügt, P);

13. Schnurhalter nach der forderung 1, die in dem charakterisiert wird, was auf der plakette (P) von den domen (ER) disponiert ist.

14. Schnurhalter nach der Forderung 1, die in dem charakterisiert wird, was längsweise in vorsprung auf der plakette (P) von den verstärkungen (R G) von steifheit disponiert ist,

15. Schnurhalter für eine fischfang-Linie mit einem schwimmer, einen Kegel, 11, und eine verstehend, fuhler(13), dieser beinhaltende Schnurhalter :
- eine ebene Plakette, P) ;
- vier elemente (E) in form eines disponierten zylinders gegen die extremitäten der plakette (P), die elemente (E), eine stütze-zone (Z) von linie, deren zrofil eine biegung hat, präsentierend,
genügst, um die fischfang-Linie (CH) ohne falzung noch Verschlechterung, für einzurollen, die eine der länge nach mittlere achse (ML) zwischen den elementen bestimmt ist, und für das vier linien-führer (GD) zwei von zwei von teil von ander der der länge nach mittleren achse (ML) angeordnt werden für positioniert den Kegel,( 11), und die fuhler (13 )des schwimmers
